# EUROPEAN PATENT SPECIFICATION

(11) **EP 3 117 123 B1**
(45) Date of publication and mention of the grant of the patent: **19.08.2020**
(21) Application number: 15708555.6
(22) Date of filing: 10.03.2015
(51) Int. Cl.: F16G 13/20, F16G 13/16

(54) **PUSH CHAIN WITH ELASTIC BACKING BELT**
SCHUBKETTE MIT ELASTISCHEM UNTERSTÜTZUNGRIEMEN
CHAÎNE DE POUSSÉE AVEC BANDE DE SUPPORT ÉLASTIQUE

(30) Priority: 10.03.2014 DE 102014103164
(43) Date of publication of application: 18.01.2017
(73) Proprietor: GE Sensing & Inspection Technologies GmbH, 50354 Hürth (DE)
(72) Inventor: MANZ, Henning, 50321 Brühl (DE); SCACCABAROZZI, Luca, 50668 Köln (DE)
(74) Representative: BRP Renaud & Partner mbB Rechtsanwälte Patentanwälte Steuerberater
(86) International application number: PCT/EP2015/054986
(87) International publication number: WO 2015/135953

(56) References cited:
- EP-A1- 0 789 167
- EP-A1- 2 375 104
- DE-U1- 29 604 692
- US-A- 3 358 524
- US-B1- 6 354 070

## Description

The present invention relates to a push chain that has a plurality of chain elements situated one after another, which each have two side plates that are situated on opposite sides from each other and aligned parallel to each other and that are connected to each other by a connecting plate; the side plates and the connecting plate form an approximate U-shape in cross-section.

US 6 354 070 B1 discloses a flexible cable guide with detachable guide links.

In the context of the invention, the term "push chain" means a device that can transmit not only thrusting forces, but also tensile forces. By contrast with purely pull chains, a drive chain becomes rigid in the pushing direction, but remains deflectable for example by means of sprockets. Such push chains are embodied, for example, in the form of so-called stiff-backed chains.

In a stiff-backed chain, the ability to push is enabled by specially shaped chain links that are connected to each other by hinges and engage each other in a form-locked fashion so that they are supported against one another in a movement direction. The chain links are composed of high-precision mechanical links that have the ability to move high loads by pulling and pushing. In this connection, the chain links continuously embrace one another; they can be wound in one direction and in the other direction, they form a rigid unit.

The essential advantage of such chain links, in addition to their ability to be used in both a pulling direction and pushing direction, also lies in the fact that due to their deflectability, they can also be accommodated in relatively small spaces. Storing such push chains also requires little space.

For example, US 6,224,037 B1 has disclosed a push chain of this kind with a stiff-backed design. DE 10 2012 214 270 A1 has also disclosed a push chain of this kind with a corresponding stiffening principle. The push chains disclosed in the above-mentioned references have in common the fact that their chain links are connected to one another by hinge joints. The stiffening of the entire chain in one movement direction is achieved in that side plates of the chain links engage with one another in a form-locked fashion and achieve a blockade effect. A significant disadvantage lies in the fact that it is only possible to produce the chain links with great difficulty and it is not possible to connect the chain links to one another in a permanently play-free fashion. This results in the fact that due to the play of the hinges, the push chain is deflected in the longitudinal direction away from the desired straight line; in other words, the push chain does not extend in an exactly linear fashion. Finally, EP2375104 A1 discloses *inter alia* a linearly moving extendable mechanism comprising yet another push chain.

As an alternative system, there are known drive means that have two drive means or chains, whose chain links engage with one another in zipper fashion in order to form a push chain, thus stiffening the combined chain that is composed of the two individual chains. This is disclosed, for example, by US 7,270,619 B2. The two individual chains in this case are not stiff-backed; the rigidity is only produced by the connection of the two individual chains to each other. In this embodiment variant as well, there is a relatively large amount of play between the elements so that even when the two individual chains are connected to each other, this does not produce a combined push chain that is reliably straight or linear. In addition, due to wear and stress, a clean reciprocal engagement of the chain links of the two individual chains is not reliably possible over the long-term.

The object of the present invention is to create a push chain for transmitting tensile forces and thrusting forces, which on the one hand, has a relatively simple design and can thus be produced inexpensively but on the other hand, only has a small amount of play between the chain links. It should be possible to align this push chain in as straight or linear a fashion as possible.

According to the invention, the object is attained by means of a push chain with the features of the independent claim 1.

According to the invention, the individual chain links are not connected to one another directly; instead, the individual chain links are attached to an elastically deformable backing belt. The attachment is produced by means of a respective connecting plate that connects the two side plates of the chain links to each other. The backing belt holds the chain links exactly in position and exerts return forces that always drive the push chain back into the extended, straight form after a deflection. The elastically deformable backing belt can be composed, for example, of a metal or plastic. The chain links are advantageously screwed or riveted to the backing belt. In a particular embodiment variant, the backing belt and the individual chain links can also be embodied of one piece, for example by being manufactured using the injection molding process.

The essential factor is that the chain links are supported against one another via contact surfaces when the backing belt is oriented in a straight line. However, if the backing belt is bent or deflected, then the contact surfaces of the chain links move apart from one another. The thrusting forces of the push chain are transmitted via the contact surfaces of the chain links, while tensile forces are transmitted via the backing belt.

According to the present invention, the chain links are embodied as U-shaped elements; the two side plates situated on opposite sides from each other and extending parallel to each other are connected to each other by a connecting plate that extends in the longitudinal direction of the push chain and chain links and is the same length as the latter. The contact surfaces are composed of end surfaces of the side plates and of the connecting plate; the plane of the contact surfaces in this case extends transversely to the longitudinal direction of the push chain.

A significant advantage of the push chain according to the invention lies in the fact that due to the simple and inexpensive attachment of the individual chain links to the backing belt, it is not necessary to provide an articulated connection of the chain links to one another. As explained above, this otherwise customary connection of the chain links to one another is always accompanied by a certain amount of play, which results in a disadvantageous deflection of the push chain away from the linear.

According to the present invention, the side plates have recesses and/or projections that correspond to one another. When the push chain is stretched straight, a projection protruding in the longitudinal direction of the push chain is situated in a recess of the adjacent side plate, thus achieving a form-locked engagement, which stiffens the chain. If the push chain or more precisely, the backing belt, is bent or deflected, then the projections are moved out of their respective recesses. The projections and recesses in this case can have any suitable shape; it is only essential that the projections be able to move into and out of the recesses.

A significant advantage in the implementation of recesses and projections lies in the fact that the individual chain links are also nested one inside the other transversely to the longitudinal direction of the push chain and are therefore held in a secure fashion. This also encourages a precise and linear travel of the push chain.

In a particularly advantageous embodiment variant, the side plates are embodied as essentially rectangular; spaced apart from the connecting plate, a likewise essentially rectangular contact arm protrudes laterally from a first end surface or side surface in the longitudinal direction of the push chain. In the opposite longitudinal direction, a corner region of the second lateral edge opposite from the first lateral edge has a recess, whose size and shape corresponds to those of the protruding contact arm. When the push chain is stretched straight, the contact arm of each chain link is situated in the recess of the adjacent chain link. But if the push chain is bent, the respective contact arm moves out from the adjacent recess.

The push chain can be driven by various drive means. In a simple embodiment variant, driving wheels contact the push chain and drive it by frictional force in a linear direction toward the front or back along the longitudinal axis of the push chain. In this case, the contact can occur on one or both of the side plates, but also on the connecting plate.

In order to increase the advancing along the longitudinal axis, the force transmission between the drive means can be embodied in the form of a rack and pinion drive. In this case, the push chain according to the invention has toothed sections on at least one outside of its chain links, which can be engaged by the teeth of a drive pinion. In order to enable a uniform and reliable propulsion of the push chain, each of the side plates of the chain links advantageously has correspondingly toothed sections so that the push chain can be contacted from two sides by pinions or driving wheels. In this case, both of the contacting pinions can be embodied in the form of drive pinions and these move the push chain in the longitudinal direction. Alternatively, it is advantageously possible to provide only one drive pinion while all that is provided on the opposite side is a non-driven guide roller. This can be embodied either likewise as a sprocket with corresponding teeth or also, for cost reasons, it is conceivable for the contact to occur with a smooth roller acting as a guide roller, for example one made of plastic or rubber.

According to the present invention, the side plates are provided with toothed elements on the outside, which cover the outer surfaces of the side plates almost completely. The toothed elements in this case extend in the longitudinal direction from the free end of the contact arm to the opposing recess and transversely to the longitudinal direction, from one longitudinal edge of the side plate to the opposite longitudinal edge. Then the contact arm no longer protrudes freely relative to the end surface of the side plate, but is instead located next to the toothed element. When the push chain is extended straight, a region of the adjacent chain link situated beneath the recess and protruding along the longitudinal axis relative to the toothed element is thus situated underneath the contact arm and inside two opposing toothed elements. This has the advantage that the individual chain links are also nested one inside the other and held in the transverse direction relative to the longitudinal axis of the push chain, which permits an extremely exact, precisely tracking alignment of the push chain.

In the embodiment variant of the push chain according to the invention, the space between the side plates and the connecting plate is fully usable. For example, cables or other elements can be introduced into this internal space. In order to protect such cables, lines, or similar elements from outside influences, it is possible according to the invention to close the otherwise open side of the cross-sectionally U-shaped chain links with closing elements. These can be embodied as plate-shaped elements with essentially rectangular cross-sections.

In a particularly advantageous embodiment variant, the closing elements can be used to prevent an unwanted torsion effect of the push chain. This is achieved in that a push chain has closing elements of different lengths in the longitudinal direction. Closing elements are provided that are longer in the longitudinal direction of the push chain than the end surfaces of the side plates oriented away from the transverse connecting plate. These longer closing elements each extend with their respective free ends into the adjacent chain links, thus bridging all the way over a middle chain-link and respectively contacting the two adjacent chain links. Between these longer closing elements, correspondingly shorter closing elements are provided. The shorter closing elements correspond to the length of the side plates minus the two longitudinal sections of the respective adjacent longer closing elements that protrude in the longitudinal direction. The overlapping length of the longer closing elements according to the invention effectively reduces the ability of the push chain to be twisted.

The invention is particularly suitable for use in connection with a testing, monitoring, or measurement of the elongated hollow elements such as hollow shafts. In particular, the push chain can be used to guide ultrasonic sensors into a hollow shaft. In lieu of an ultrasonic testing, it is also possible to use the push chain to introduce other sensors or even a camera into correspondingly long cavities. In order to ensure an optimum alignment of the push chain inside the hollow body, this hollow body can be affixed, for example screw-mounted, to a device that supports and drives the push chain.

The invention will be explained in greater detail below in conjunction with the following figures. The depictions therein should not be understood to have a restrictive effect, but instead merely represent preferred embodiment variants. In the drawings:
- Fig. 1:: shows a perspective, simplified depiction of a first embodiment variant of the push chain when stretched straight,
- Fig. 2:: shows the push chain from Fig. 1 when bent,
- Fig. 3:: shows a simplified side view of a second embodiment variant of the invention,
- Fig. 4:: shows a chain link according to the invention in a third exemplary embodiment of the invention,
- Fig. 5:: shows a top view of the chain link according to the invention from Fig. 4.
- Fig. 6:: shows a front view of the chain link according to the invention from Fig. 4,
- Fig. 7:: shows a perspective depiction of another embodiment variant of the chain link from Fig. 4,
- Fig. 8:: shows a drive device according to the invention for the push chain,
- Fig. 9:: shows a perspective depiction of the drive device from Fig. 8,
- Fig. 10:: shows a simplified depiction of a chain link according to the invention in a cross-section with a closing element and elements situated on the inside,
- Fig. 11:: shows a simplified depiction of a top view of chain links that correspond to Fig. 10,
- Fig. 12:: shows a perspective depiction of a push chain according to the invention.

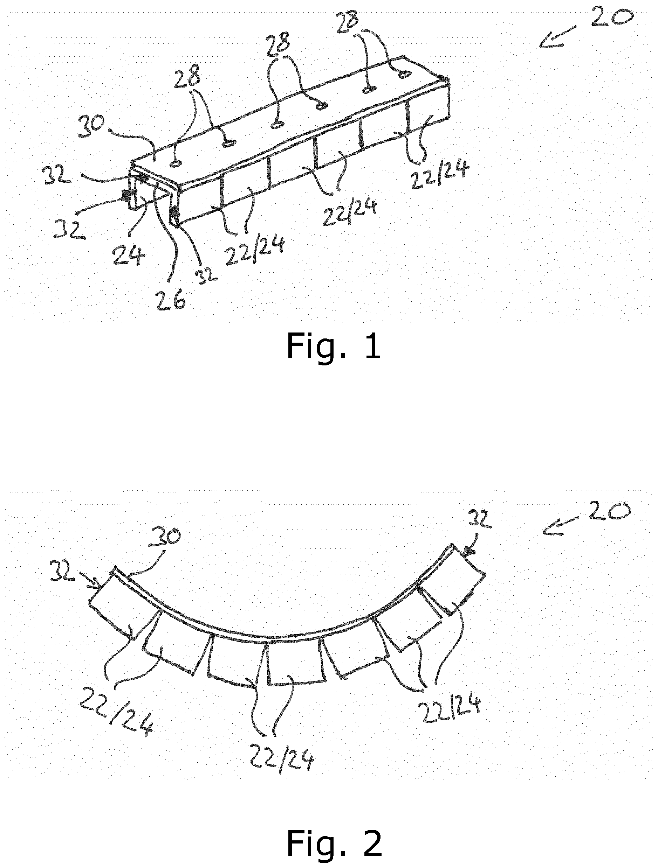

Figs. 1 and 2 show a simplest embodiment of a push chain 20 according to the invention. Chain links 22 are shown, which are situated next to one another or one after another and are approximately U-shaped in cross-section. Two side plates 24 that extend along a longitudinal axis x-x of the push chain 20 are essentially rectangular, possibly also square, and are connected to each other by means of a connecting plate 26.

The connecting plates 26 of the chain links 22 in the exemplary embodiment shown are each fastened by a rivet 28 to an elastically deformable backing belt 30. When the push chain 20 is stretched straight, the individual chain links 22 touch one another with contact surfaces 32 that are comprised of end surfaces of the two side plates 24 and connecting plate 26 that extend transversely to the longitudinal axis x-x. On the one hand, the contact surfaces 32 prevent the push chain 20 from being able to bend in a direction from the backing belt 30 toward the chain links 22; on the other hand, thrusting forces along the longitudinal axis x-x are transmitted via the contact surfaces 32 from one chain link 22 to the next. By contrast, the backing belt 30 serves to transmit tensile forces.

Fig. 2 shows that the push chain 20 can be deformed or deflected in the direction oriented away from the chain links 22. When this happens, the chain links 22 move away from one another.

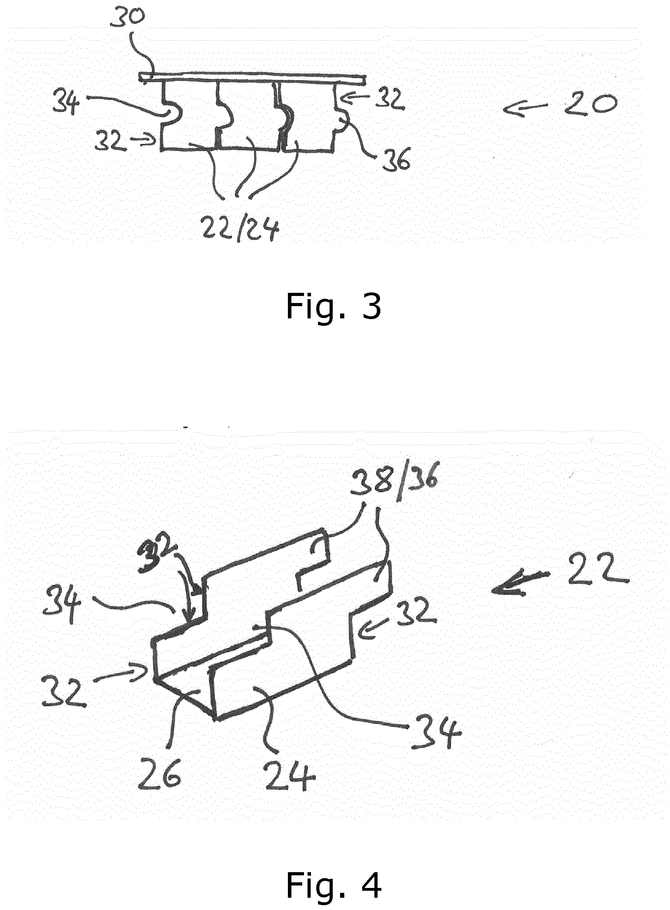

Fig. 3 shows a simple embodiment variant of another preferred form of the chain links 22. These chain links have recesses 34 in their side plates 24 in the region of their contact surfaces 32 and corresponding projections 36 situated at the opposite ends in the longitudinal direction x-x. When the push chain 20 is stretched straight, the projections 36 are situated in the recesses 34, which on the one hand, results in an improved alignment of the chain links 22 relative to one another and thus of the entire push chain 20 and on the other hand, permits a transmission of force transversely or obliquely relative to the longitudinal direction x-x. The recess 34 and the projections 36 can in principle be any shape; it is only essential that the projections 36 be able to move into the recesses 34 and to move out of them when the push chain 20 is deflected.

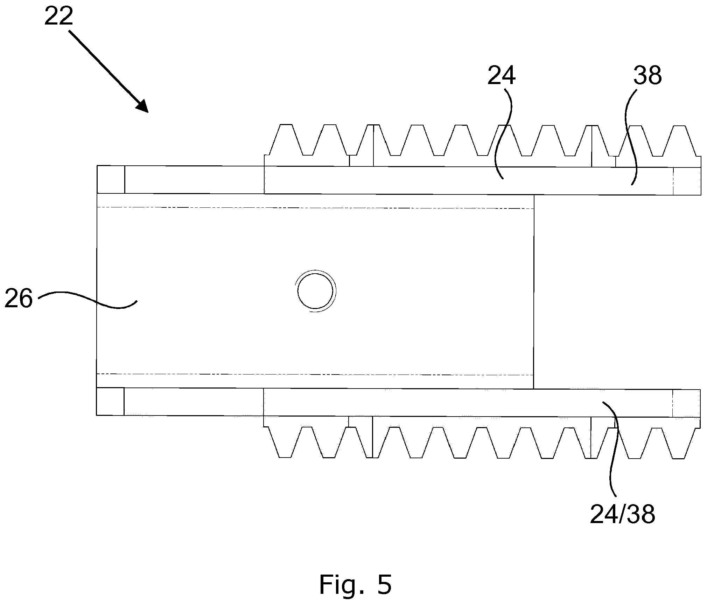

Figs. 4 through 6 show other forms of a chain link 22 according to the invention. The side plates 24 of such a chain link 22 are essentially rectangular and in their end region oriented away from the connecting plate 26, have a recess 34 and a projection 36. The recess 34 is produced by omitting a corner region of the side plate 24; the projection 36 is formed by a kind of contact arm 38; the form and size of the contact arm 38 correspond to those of recess 34. The contact arm 38 protrudes along the longitudinal axis x-x relative to the connecting plate 26.

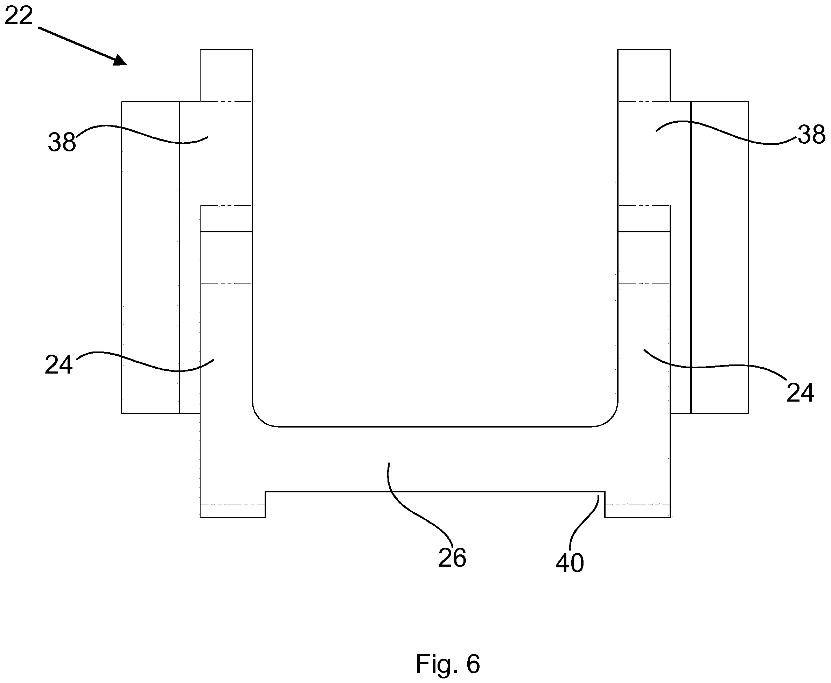

Preferably, the connecting plates 26 can have a indentation 40 on their side oriented away from the side plates 24, into which indentation the backing belt 30 can be inserted (see Fig. 6). The chain links 22 are thus aligned precisely relative to one another transverse to the longitudinal axis x-x; this also reduces the overall height of the push chain 20.

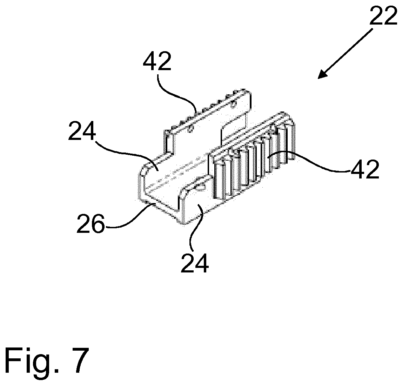

The drive of the push chain 20 in the exemplary embodiment shown is embodied in the form of a rack; toothed elements 42 are situated on at least one outside, but preferably both outsides, of the side plates 24 (in particular, also see Fig. 7). These toothed elements 42 can be embodied as separate elements and fastened to the side plates 24, but they can also be embodied as integrally incorporated into the surface of the side plates 24 themselves. The toothed elements 42 are provided to enable pinions or gears 44 to engage in the teeth of the toothed elements 42 and drive the push chain 20. An arrangement of toothed elements 42 on both sides of the chain links 42 is suitable for ensuring an exact advancing of the push chain 20, but only one of the gears 44 that are likewise provided on both sides has to be embodied as a driven pinion. The other, gear 44 on the opposite side can be embodied as a guiding gear.

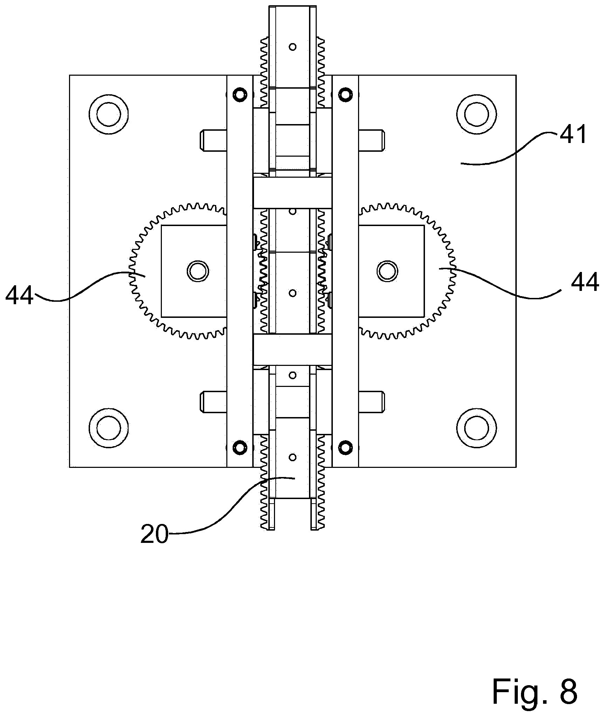

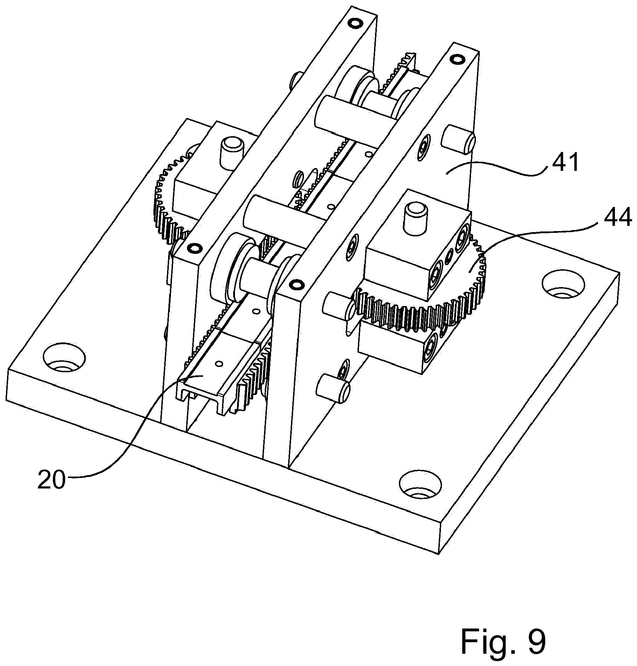

Figs. 8 and 9 show an example of a corresponding drive unit 41 with gears 44 situated on both sides.

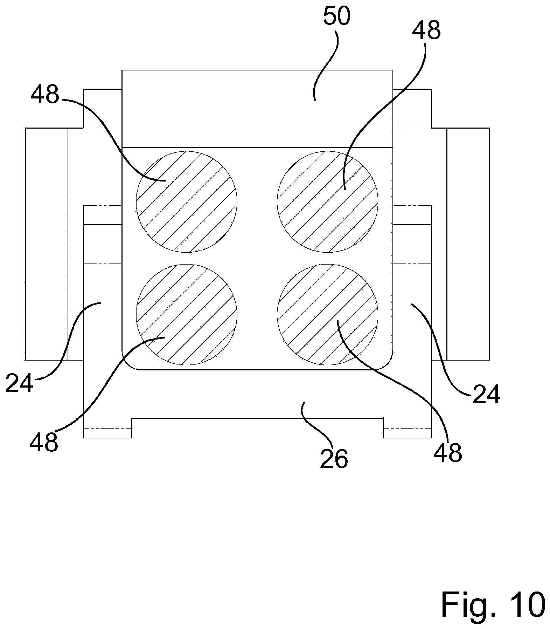

Fig. 10 shows that an interior 46 of the cross-sectionally U-shaped chain links 22 can be used for accommodating elements such as cables or lines 48.

In order to protect the lines 48 contained inside, closing elements 50 can be provided according to the invention, which contact the side plates 24 in the region of their free ends and close the interior 46.

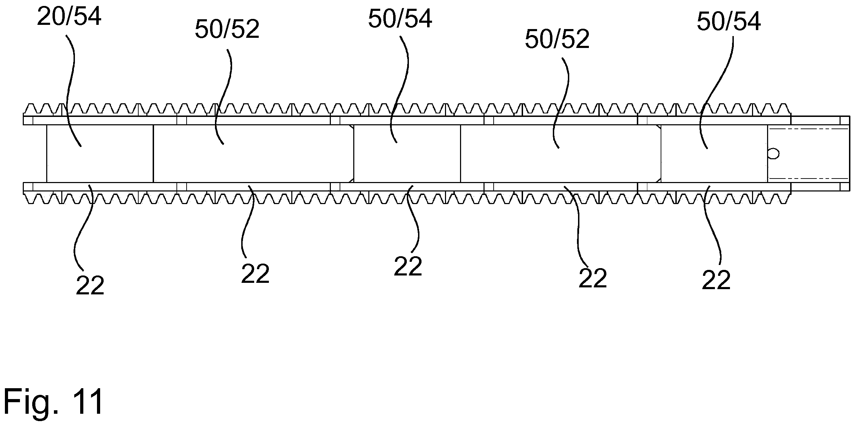

Fig. 11 shows that the closing elements 50 can also be used to hinder unwanted torsion forces or movements. This is achieved by using closing elements 50 of different lengths. A long element 52 respectively extends along the longitudinal axis x-x over an entire chain link 22 and respectively protrudes between side plates 24 of the two adjacent chain links 22. Consequently, a torsion of the three adjacent chain links 22 is prevented or at least hindered. The long element 52 is adjoined in the longitudinal direction x-x by a respective short element 54. Over the course of the push chain 20, the closing elements 50 are thus arranged so that long elements 52 alternate with short elements 54.

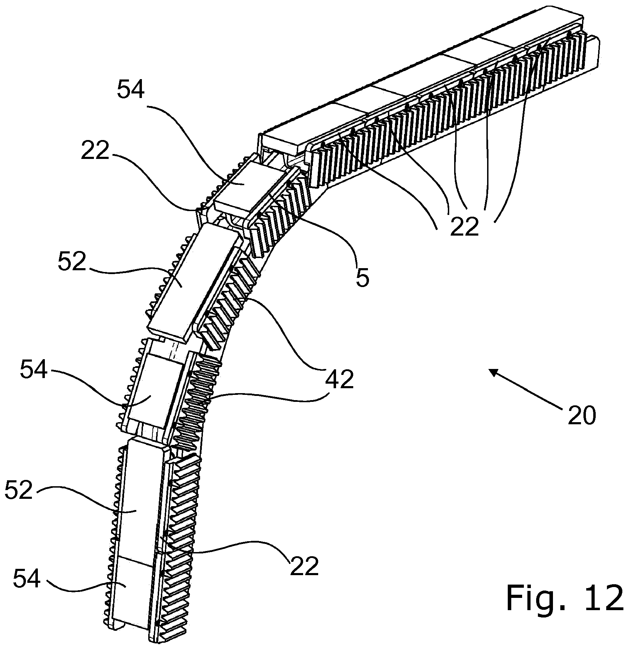

The arrangement of the chain links 22 and the function of the push chain 20 are shown once again in Fig. 12. Among other things, it is clear that in the straight position of the push chain 20, the closing elements 50 and also the toothed elements 42 of different chain links 22 are situated directly next to one another. It is also clear that the push chain 20 can be deflected in the direction starting from the backing belt 30 and oriented away from the chain links 22.

## Claims

1. A push chain (20), having
- a plurality chain links (22) situated one behind another along a longitudinal axis x-x of the push chain (20), which each have two side plates (24) that are situated on opposite sides from each other and aligned parallel to each other and that are connected to each other by a connecting plate (26); the side plates (24) and the connecting plate (26) together form an approximate U-shape in cross-section and
- an elastically deformable backing belt (30), which is attached to the connecting plates (26) of the chain links (22),
wherein with an approximately straight alignment of the push chain (20), the chain links (22) rest against one another with contact surfaces (32);
wherein the side plates (24) of the chain links (22) have recesses (34) in the region of their contact surfaces (32) and corresponding projections (36) at the opposite ends in the longitudinal direction x-x so that the projections (36) are situated in the recesses (34) when the push chain (20) is stretched straight;
wherein the outsides of both side plates (24) of a chain link (22) have a toothed element (42).

2. The push chain (20) according to claim 1, **characterized in that** the contact surfaces (32) of the chain links (20) are each composed of end surfaces of the two side plates (24) and connecting plate (26) that extend transversely to the longitudinal axis x-x.

3. The push chain (20) according to claim 1 or claim 2, **characterized in that** the connecting plates (26) each have a respective indentation (40) on their side oriented away from the side plates (24), into which the backing belt (30) can be inserted.

4. The push chain (20) according to any preceding claim, **characterized in that** the side plates (24) of the chain links (22) are essentially rectangular, the recess (34) is formed by omitting a corner region of the side plate (24), and the projection (36) is formed by a contact arm (38), with the shape and size of the contact arm (38) corresponding to the shape and size of the recess (34).

5. The push chain (20) according to any preceding claim, **characterized in that** both side plates have toothed elements (42), which are embodied as flat and extend to the free end of the contact arm (38) so that the contact arms (38) are situated between the two toothed elements (42) and when the push chain is stretched straight, a region that is situated underneath the recess (34) of the adjacent chain link
(22) and extends along the longitudinal axis x-x relative to the toothed element (42) of the adjacent chain link (22) is situated underneath the contact arms (38) and inside two toothed elements (42) situated on opposite sides from each other.

6. The push chain (20) according to one of claims 1 through 5, **characterized in that** closing elements (50) are provided, which contact the side plates (24) of the chain links (22) in the region of their free ends and close an interior (46) inside the chain links (22).

7. The push chain (20) according to claim 6, **characterized in that** long elements (52) and shorter elements (54) that alternate along the longitudinal axis x-x are provided as closing elements (50); one long element (52) respectively extends over an entire chain link (22) and respectively protrudes between side plates (24) of the two adjacent chain links and the long element (52) is adjoined by a respective short element (54) at each of its ends in the longitudinal direction x-x.

8. A device for testing elongate hollow elements including a push chain (20) according to any one of the preceding claims.

9. A use of a push chain (20) according to any of claims 1 through 7 in a device for testing elongated hollow elements.

## Patentansprüche

1. Schubkette (20) mit
- einer Vielzahl von Kettengliedern (22), die entlang einer Längsachse x-x der Schubkette (20) hintereinander angeordnet sind und jeweils zwei Seitenplatten (24) aufweisen, die auf gegenüberliegenden Seiten angeordnet und parallel zueinander ausgerichtet sind und die durch eine Verbindungsplatte (26) miteinander verbunden sind; wobei die Seitenplatten (24) und die Verbindungsplatte (26) zusammen eine annähernde U-Form im Querschnitt bilden, und
- einem elastisch verformbaren Unterstützungsriemen (30), der an den Verbindungsplatten (26) der Kettenglieder (22) befestigt ist,
wobei bei einer annähernd geraden Ausrichtung der Schubkette (20) die Kettenglieder (22) mit Kontaktflächen (32) aneinander anliegen;
wobei die Seitenplatten (24) der Kettenglieder (22) Aussparungen (34) im Bereich ihrer Kontaktflächen (32) und entsprechende Vorsprünge (36) an den gegenüberliegenden Enden in Längsrichtung x-x aufweisen, sodass sich die Vorsprünge (36) in den Aussparungen (34) befinden, wenn die Schubkette (20) gerade gespannt ist;
wobei die Außenseiten beider Seitenplatten (24) eines Kettenglieds (22) ein verzahntes Element (42) aufweisen.

2. Schubkette (20) nach Anspruch 1, **dadurch gekennzeichnet, dass** die Kontaktflächen (32) der Kettenglieder (20) jeweils aus Endflächen der beiden Seitenplatten (24) und der Verbindungsplatte (26) bestehen, die sich quer zur Längsachse x-x erstrecken.

3. Schubkette (20) nach Anspruch 1 oder Anspruch 2, **dadurch gekennzeichnet, dass** die Verbindungsplatten (26) auf ihrer von den Seitenplatten (24) abgewandten Seite jeweils eine Vertiefung (40) aufweisen, in die der Unterstützungsriemen (30) eingeführt sein kann.

4. Schubkette (20) nach einem der vorstehenden Ansprüche,
**dadurch gekennzeichnet, dass** die Seitenplatten (24) der Kettenglieder (22) im Wesentlichen rechteckig sind, die Aussparung (34) durch Weglassen eines Eckbereichs der Seitenplatte (24) gebildet wird und der Vorsprung (36) durch einen Kontaktarm (38) gebildet wird, wobei die Form und Größe des Kontaktarms (38) der Form und Größe der Aussparung (34) entspricht.

5. Schubkette (20) nach einem der vorstehenden Ansprüche,
**dadurch gekennzeichnet, dass** beide Seitenplatten verzahnte Elemente (42) aufweisen, die flach ausgeführt sind und sich bis zum freien Ende des Kontaktarms (38) erstrecken, sodass sich die Kontaktarme (38) zwischen den beiden verzahnten Elementen (42) befinden und bei gerade gespannter Schubkette ein Bereich, der sich unterhalb der Aussparung (34) des benachbarten Kettenglieds (22) befindet und sich entlang der Längsachse x-x relativ zu dem verzahnten Element (42) des benachbarten Kettenglieds (22) erstreckt, unterhalb der Kontaktarme (38) und innerhalb von zwei verzahnten Elementen (42) befindet, die auf einander gegenüberliegenden Seiten angeordnet sind.

6. Schubkette (20) nach einem der Ansprüche 1 bis 5,
**dadurch gekennzeichnet, dass** Verschlusselemente (50) bereitgestellt werden, die die Seitenplatten (24) der Kettenglieder (22) im Bereich ihrer freien Enden berühren und einen Innenraum (46) innerhalb der Kettenglieder (22) verschließen.

7. Schubkette (20) nach Anspruch 6, **dadurch gekennzeichnet, dass** lange Elemente (52) und kürzere Elemente (54), die sich entlang der Längsachse x-x abwechseln, als Verschlusselemente (50) bereitgestellt werden; sich jeweils ein langes Element (52) über ein ganzes Kettenglied (22) erstreckt und jeweils zwischen Seitenplatten (24) der beiden benachbarten Kettenglieder vorsteht und sich an das lange Element (52) jeweils ein kurzes Element (54) an jedem seiner Enden in Längsrichtung x-x anschließt.

8. Vorrichtung zum Prüfen länglicher Hohlelemente, umfassend eine Schubkette (20) nach einem der vorstehenden Ansprüche.

9. Verwenden einer Schubkette (20) nach einem der Ansprüche 1 bis 7 in einer Vorrichtung zum Prüfen länglicher Hohlelemente.

## Revendications

1. Chaîne de poussée (20), possédant :
- une pluralité de maillons de chaîne (22) situés les uns derrière les autres le long d'un axe longitudinal x-x de la chaîne de poussée (20), qui ont chacun deux plaques latérales (24) situées de part et d'autre et alignées parallèlement l'une avec l'autre et reliées l'une à l'autre par une plaque de liaison (26) ; les plaques latérales (24) et la plaque de liaison (26) forment ensemble une forme en U approximative en section transversale et
- une bande de support (30) élastiquement déformable, qui est fixée aux plaques de liaison (26) des maillons de chaîne (22),
dans laquelle avec un alignement approximativement droit de la chaîne de poussée (20), les maillons de chaîne (22) reposent les uns contre les autres avec des surfaces de contact (32) ;
dans laquelle les plaques latérales (24) des maillons de chaîne (22) ont des évidements (34) dans la région de leurs surfaces de contact (32) et des saillies correspondantes (36) aux extrémités opposées dans la direction longitudinale x-x de sorte que les saillies (36) sont situées dans les évidements (34) lorsque la chaîne de poussée (20) est étirée droite ;
dans laquelle les extérieurs des deux plaques latérales (24) d'un maillon de chaîne (22) ont un élément denté (42).

2. Chaîne de poussée (20) selon la revendication 1, **caractérisée en ce que** les surfaces de contact (32) des maillons de chaîne (20) sont chacune constituées de surfaces d'extrémité des deux plaques latérales (24) et d'une plaque de liaison (26) qui s'étendent transversalement à l'axe longitudinal x-x.

3. Chaîne de poussée (20) selon la revendication 1 ou la revendication 2, **caractérisée en ce que** les plaques de liaison (26) ont chacune une indentation respective (40) sur leur côté orienté à l'opposé des plaques latérales (24), dans laquelle la bande de support (30) peut être insérée.

4. Chaîne de poussée (20) selon l'une quelconque des revendications précédentes, **caractérisée en ce que** les plaques latérales (24) des maillons de chaîne (22) sont essentiellement rectangulaires, l'évidement (34) est formé par omission d'une région de coin de la plaque latérale (24), et la projection (36) est formée par un bras de contact (38), la forme et la dimension du bras de contact (38) correspondant à la forme et à la taille de l'évidement (34).

5. Chaîne de poussée (20) selon l'une quelconque des revendications précédentes, **caractérisée en ce que** les deux plaques latérales ont des éléments dentés (42), qui sont réalisés sous forme de méplat et s'étendent vers l'extrémité libre du bras de contact (38) de sorte que les bras de contact (38) sont situés entre les deux éléments dentés (42) et lorsque la chaîne de poussée est étirée droite, une région qui est située sous l'évidement (34) du maillon de chaîne (22) adjacent et s'étend le long de l'axe longitudinal x-x par rapport à l'élément denté (42) du maillon de chaîne (22) adjacent est située sous les bras de contact (38) et à l'intérieur de deux éléments dentés (42) situés de part et d'autre.

6. Chaîne de poussée (20) selon l'une des revendications 1 à 5, **caractérisée en ce que** des éléments de fermeture (50) sont prévus, qui viennent en contact avec les plaques latérales (24) des maillons de chaîne (22) dans la région de leurs extrémités libres et ferment un intérieur (46) à l'intérieur des maillons de chaîne (22).

7. Chaîne de poussée (20) selon la revendication 6, **caractérisée en ce que** des éléments longs (52) et des éléments plus courts (54) qui alternent le long de l'axe longitudinal x-x sont prévus comme éléments de fermeture (50) ; un élément long (52) s'étend respectivement sur un maillon de chaîne (22) entier et fait saillie respectivement entre des plaques latérales (24) des deux maillons de chaîne adjacents et l'élément long (52) est relié par un élément court (54) respectif à chacune de ses extrémités dans la direction longitudinale x-x.

8. Dispositif de test d'éléments creux allongés incluant une chaîne de poussée (20) selon l'une quelconque des revendications précédentes.

9. Utilisation d'une chaîne de poussée (20) selon l'une quelconque des revendications 1 à 7 dans un dispositif de test d'éléments creux allongés.
